# EUROPEAN PATENT SPECIFICATION

(11) **EP 1 422 385 B1**
(45) Date of publication and mention of the grant of the patent: **02.05.2012**
(21) Application number: 02755808.9
(22) Date of filing: 02.08.2002
(51) Int. Cl.: B21D 19/08, B21D 22/02, B21D 22/20

(54) **METHOD OF MANUFACTURING TURBINE FRAME OF VGS TYPE TURBO CHARGER**
VERFAHREN ZUR HERSTELLUNG EINES TURBINENRAHMENS FÜR EINEN VGS-TURBOLADER
PROCEDE DE FABRICATION DE CADRE DE TURBINE DE TURBOCOMPRESSEUR VGS

(30) Priority: 03.08.2001 JP 2001235746; 03.08.2001 JP 2001235754; 03.08.2001 JP 2001235761
(43) Date of publication of application: 26.05.2004
(73) Proprietor: Akita Fine Blanking Co., Ltd., Shimada-shi, Shizuoka 427-0103 (JP)
(72) Inventor: OHISHI, Shinjiroh, Shimada-shi, Shizuoka 427-0017 (JP)
(74) Representative: Hague, Alison Jane
(86) International application number: PCT/JP2002/007944
(87) International publication number: WO 2003/014533

(56) References cited:
- JP-A- 5 309 425
- JP-A- 10 099 923
- JP-A- 10 316 990
- JP-A- 11 050 083
- JP-A- 11 228 980
- JP-A- 2000 064 846
- JP-A- 2001 071 043

## Description

### TECHNICAL FIELD

The present invention relates generally to a VGS turbocharger for use in an automobile engine or the like, and more particularly to a novel method of manufacturing a turbine frame to be incorporated therein for rotatably holding adjustable blades, which method is capable of eliminating a time-consuming cutting operation to the utmost.

### BACKGROUND ART

A turbocharger is known as a supercharger used as means for improving the power output and the performance of an automobile engine. The turbocharger is an apparatus in which a turbine is driven by the exhaust energy of the engine to rotate a compressor with the power of the turbine, whereby the engine is supercharged to have more air fed into it than fed into it by natural suction. In the case of an engine capable of running at up to a high rotational speed region, when the engine is running at low rotational speeds, the exhaust turbine of the turbocharger hardly functions due to the reduced flow rate of the exhaust gas, so that the engine can not avoid giving a slow-moving feeling until the exhaust turbine runs efficiently, and necessitating a subsequent time or a so-called turbo-lag before the turbine rapidly reaches the full-running state. Furthermore, in the case of a diesel engine which runs inherently at low rotational speeds, there is a disadvantage that it is difficult to produce an effect of the turbocharger.

Therefore, a VGS turbocharger that works efficiently even when the engine is running at low rotational speeds has been developed. The turbocharger of this type is adapted to obtain a high power output when the engine is running at low rotational speeds by throttling flow of exhaust gas at a low flow rate with a plurality of adjustable blades (vanes) disposed on an outer periphery of the exhaust turbine to increase the velocity of the exhaust gas and increase work of an exhaust turbine. For this reason, in the VGS turbocharger, an adjusting mechanism for the adjustable blades are required additionally, and it is required that the associated constituting parts be formed to have a complicated shape or the like in comparison with those of the conventional one.

It has been common that, when a turbine frame for rotatably holding adjustable blades in such a VGS turbocharger is manufactured, a metal material (or a shaped material having a starting form for the turbine frame) including a boss portion and a flange portion that are integrally formed is first formed, for example, in accordance with a precision casting method represented by a lost wax casting method, a metal injection molding method or the like, and the shaped material is then suitably subjected to cutting or the like, to thereby finish the turbine frame to have a desired shape and dimensions.

However, in the technique using cutting operations applied to the shaped material, the following problems arise. Since this kind of turbo apparatus is constructed so as to introduce exhaust gas and utilize energy of the exhaust gas, a surface member thereof is naturally exposed to a high-temperature atmosphere of the exhaust gas. Since the exhaust gas contains constituents that can corrode the metal material, a heat resisting stainless steel such as SUS310S having excellent heat, oxidation resistance and the like is also used for the turbine frame. However, since such a material is generally difficult to cut and therefore requires a lot of time to cut it, there is a problem that a lot of trouble is taken for processing it. Therefore, there has arisen a problem in achieving mass production of the turbine frame and exhaust guide and, by extension, VGS turbocharger that cutting operations are eliminated to the utmost from the turbine frame manufacturing process.

Additionally, recent years have seen tighter regulation of exhaust gas emission into the atmosphere particularly from diesel vehicles from a viewpoint of environmental protection and the like. For a diesel engine which inherently runs at low rotational speeds, mass production of a VGS turbocharger capable of improving the engine efficiency from a low rotational speed region has been strongly desired in order to reduce NOx, particulate matter (PM) and the like.

JP 2000-064846 discloses a turbine frame for a VGS turbocharger which includes a boss part provided with a vane mounting flange and a second flange part formed as a separate unit. In one example the flange that is integral with the boss part is formed by spinning and receiving holes for the adjustable blades are formed by fine-blanking.

JP 5-309425 discloses a method of forming a cylindrical container with a flange by deep-drawing an aluminum alloy plate while heating a flange part and cooling a bottom portion of the container.

### DISCLOSURE OF THE INVENTION

A method of manufacturing a turbine frame for a VGS turbocharger as defined in claim 1, wherein the turbine frame rotatably holds a plurality of adjustable blades at the outside of an outer periphery of an exhaust turbine wheel, the turbine frame being incorporated in the VGS turbocharger, and wherein exhaust gas discharged from an engine at a relatively low flow rate is suitably throttled by the adjustable blades to increase the velocity of the exhaust gas so that the exhaust turbine wheel is rotated by energy of the exhaust gas and a compressor directly coupled to the exhaust turbine wheel feeds more air into the engine than is fed into it by natural suction, whereby a high output power of the engine is obtained at low rotational speeds, is characterized in that: a blank which is punched out from a metal material having a substantially constant thickness in such a manner as to integrally include a boss forming portion and a flange forming portion is used as a shaped material serving as an original member for the turbine frame; the shaped material is formed of an austenitic heat resisting material; when the shaped material is processed, the boss forming portion is formed into a projecting state by a press forging tool; when the shaped material is processed, either one or both of the shaped material and a processing device are heated depending on an Md₃₀ value which is a strain induced martensitic transformation index of the shaped material; when the shaped material is processed, a temperature gradient is imparted to the shaped material to be processed in such a manner that the boss forming portion is the low-temperature side and the flange forming portion is the high-temperature side and the magnitude of the temperature gradient is maintained in the range of 0.5 to 3ºC/mm; and receiving holes for rotatably holding the respective adjustable blades are formed in the flange forming portion by punching.

According to the invention, it is possible to obtain a turbine frame as a finished product by press forging a blank (shaped material) blanked to a substantially constant thickness, a cutting operation can be eliminated to the utmost from processing steps of the turbine frame, resulting in mass production of the turbine frame being actually achieved. The conventional turbine frame is extremely difficult to draw or burr by press forging due to the fact that the turbine frame is made of a difficult-to-cut heat resisting material and that it has a relatively large thickness of about 5 mm, so that unavoidable time-consuming cutting operations are required after casting, resulting in the conventional turbine frame being unfit for mass production.

In accordance with claim 1 an austenitic heat resisting material is applied to the shaped material; and when the shaped material is processed, either one or both of the shaped material and a processing device are heated depending on an Md₃₀ value which is a strain induced martensitic transformation index of the shaped material.

Carrying out some or all of the manufacturing processes of the turbine frame in a warm condition improves the degree of freedom for deforming the shaped material and the like, resulting in more efficient processing being performed.

According to the invention, it is possible to determine the optimal heating temperature based on the Md₃₀ value of the type of material used, to thereby ensure a further efficiency in processing.

Furthermore, when the shaped material is processed, an appropriate temperature gradient is imparted to the shaped material to be processed. More particularly when the shaped material is processed, a temperature gradient is imparted to the shaped material to be processed in such a manner that the boss forming portion is the low-temperature side and the flange forming portion is the high-temperature side and the magnitude of the temperature gradient is maintained in the range of 0.5 to 3°C/mm.

According to the invention, an appropriate temperature gradient is imparted to the shaped material to be processed, to thereby ensure a more actual use of deep drawing and the like, which has never been hitherto achieved. Such a temperature gradient can also reduce defects such as wrinkles, cracks and local insufficient thickness associated with projection forming (deep drawing).

Preferably when the shaped material is processed, a water-soluble heat-resistant lubricant is interposedly disposed at a contact portion between the shaped material and the processing device.

The use of a water-soluble heat-resistant lubricant, for example, in a burring step, can not only ensure the burring to be performed smoothly and reliably, but also provide improved properties associated with the use of the lubricant such as coatability, dryability, high-temperature lubricity and removability, leading to an extremely high efficiency in manufacture of the turbine frame. Incidentally, ordinary lubricants deteriorate in lubricity as a result of reduced viscosity due to heating, thus making them hardly usable in a high-temperature atmosphere. On the other hand, high-viscosity lubricants such as WS₂ and MoS₂ are poor in workability and particularly in removability, so that they are unfit for manufacture of the turbine frame in the invention after all.

Preferably the press forging tool includes as its main members a die, a punch and a blank holder; and the punch is subjected to either one or both of low-speed control and inching control in the vicinity of a bottom dead point.

According to the invention, it is possible to form a projection on a difficult-to-machine turbine frame that must have a heat-resistance with added reliability, resulting in the dimensions and shape of the finished product being attained with high accuracy.

A turbine frame manufactured by the method in accordance with the invention may comprise receiving holes disposed at the outside of an outer periphery of an exhaust turbine wheel, for rotatably holding a plurality of adjustable blades, the turbine frame being incorporated in the VGS turbocharger, wherein exhaust gas discharged from an engine at a relatively low flow rate is suitably throttled by the adjustable blades to increase the velocity of the exhaust gas so that the exhaust turbine wheel is rotated by energy of the exhaust gas and a compressor directly coupled to the exhaust turbine wheel feeds more air into the engine than is fed into it by natural suction, whereby a high output power of the engine is obtained at low rotational speeds.

According to the invention, the turbine frame can be manufactured with minimal time-consuming cutting operations, to thereby enable actual mass production of the turbine frame, ensuring stable supply of the mass-produced turbine frames to the market. By making proper improvements in heating conditions in accordance with the amount of strain induced martensitic transformation of the type of material used it is possible to obtain precise mass-produced turbine frames.

A turbine frame manufactured in accordance with the claimed method may form part of an exhaust gas guide assembly for a VGS turbocharger which also comprises adjustable blades for suitably adjusting the flow rate of exhaust gas discharged from an engine so as to rotate an exhaust turbine wheel and an adjusting mechanism for suitably rotating the adjustable blades so as to adjust the flow rate of the exhaust gas, the turbine frame being for rotatably supporting the adjustable blades at the outside of an outer periphery of the exhaust turbine wheel.

According to the invention, mass production of the exhaust gas guide assembly having a high heat-resistance and high accuracy can be actually achieved.

A VGS turbocharger formed in accordance with the claimed method may be so constructed that an exhaust turbine is driven by exhaust energy of an engine to rotate a compressor coupled to the exhaust turbine with the power of the exhaust turbine, whereby the engine is supercharged to have more air fed into it than is fed into it by natural suction and the flow of the exhaust gas at a relatively low flow rate is suitably throttled to increase the velocity of the exhaust gas so that a high output power is obtained when the engine is running at low rotational speeds.

Mass production of such a VGS turbocharger having a high heat-resistance can be actually achieved. The turbocharger has a highly accurate turbine frame capable of reliably rotating adjustable blades incorporated therein, to thereby ensure accurate and reliable adjustment of the flow rate of the exhaust gas, allowing the turbocharger to sufficiently withstand use in a high-temperature exhaust gas atmosphere.

### BRIEF DESCRIPTION OF THE DRAWINGS

Fig. 1(a) is a perspective view showing a VGS turbocharger having a turbine frame incorporated therein according to the present invention, and Fig. 1(b) is an exploded perspective view showing an exhaust gas guide assembly;
Fig. 2 is an explanatory view showing the step of forming a preparatory hole for burring in a shaped material having a flat plate-like shape and the step of burring, together with the shaped material after processed;
Fig. 3 is an explanatory view showing the manner in which a shaped material having a flat plate-like shape is formed into a cup-shape by deep drawing;
Fig. 4 illustrates explanatory views showing the manner in which a hole is formed in a boss forming portion after deep drawing;
Fig. 5 is a graph showing the relationship between deformation temperature and amount of martensitic transformation when Md₃₀ = 25°C and Md₃₀ = 50°C;
Fig. 6 is a table showing an example of relationship between bore expansion ratio and various processing temperatures when the shaped material is burred;
Fig. 7 is a table showing an example of temperature gradient imparted to the shaped material during deep drawing; and
Fig. 8 is a graph showing the relationship between various magnitudes of temperature gradient and limit drawing ratio.

### BEST MODE FOR CARRYING OUT THE INVENTION

The present invention will be described hereinbelow with reference to embodiments shown in the drawings. A description will be made of a turbine frame 2 according to the present invention while a description will be given of an exhaust gas guide assembly A for a VGS turbocharger in which the turbine frame 2 is used, followed by a description of a method of manufacturing the turbine frame.

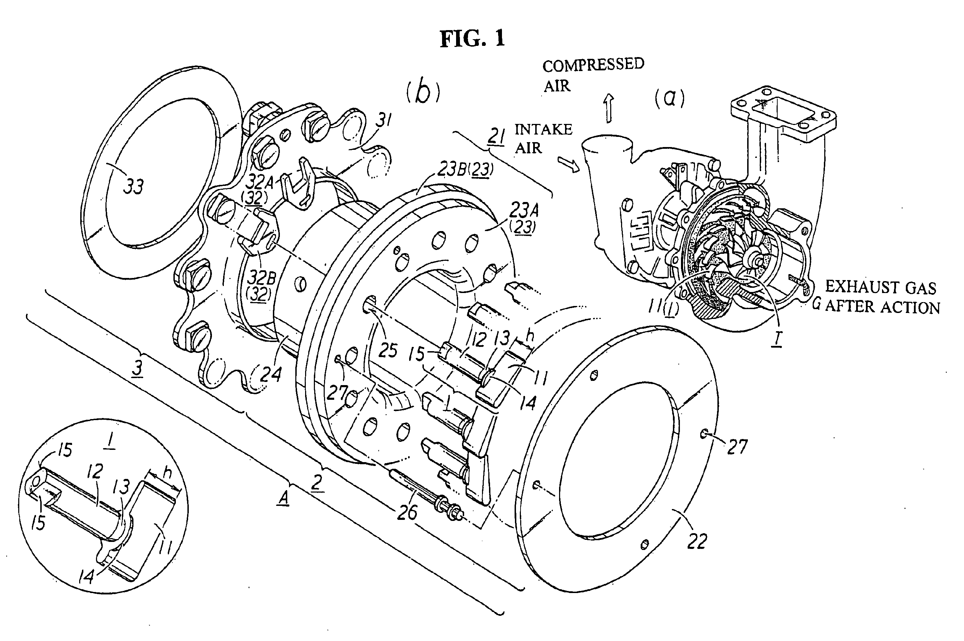

The exhaust gas guide assembly A suitably controls the flow rate of exhaust gas G by throttling the exhaust gas G as necessary while an engine is running at low rotational speeds. The exhaust gas guide assembly, as shown in Fig. 1 as an example, comprises a plurality of adjustable blades 1 for setting substantially the flow rate of the exhaust gas, provided at the outside of an outer periphery of an exhaust turbine wheel T, a turbine frame 2 for rotatably supporting the adjustable blades 1 and a blade adjusting mechanism 3 for rotating the adjustable blades 1 by a predetermined angle to set the flow rate of the exhaust gas G as necessary. Each component will be described.

First, the adjustable blade 1 will be described. As shown in Fig. 1 as an example, a plurality of adjustable blades 1 (approximately 10-15 blades for one unit of the exhaust gas guide assembly A) are arranged in an arc along the outer circumference of the exhaust turbine wheel T so that the adjustable blades 1 rotate respectively almost the same angle to suitably control the flow rate of the exhaust gas. Each adjustable blade 1 comprises a blade portion 11 and a shaft portion 12.

The blade portion 11 is formed to have a certain width corresponding mainly to a width of the exhaust turbine wheel T and an airfoil shape in cross-section in a width direction such that the exhaust gas G is effectively directed to the exhaust turbine wheel T. Hereinafter, the width dimension of the blade portion 11 is referred to as "blade height h".

The shaft portion 12 is formed to be continuous to and integrated with the blade portion 11, so that the blade portion 11 serves as a rotation shaft for the blade portion 11 to be moved.

In a portion connecting the blade portion 11 and the shaft portion 12, a taper portion 13 tapering from the shaft portion 12 to the blade portion 11 and a flange portion 14 having a somewhat larger diameter than that of the shaft portion 12 are formed continuously. A bottom face of the flange portion 14 is formed to be almost flush with an end face of the blade portion 11 on the side of the shaft portion 12 of the adjustable blade 1, to thereby ensure a smooth rotation of the adjustable blade 1 through the bottom face serving as a sliding surface in a state where the adjustable blade 1 is fitted to the turbine frame 2. Furthermore, at a distal end of the shaft portion 12, reference planes 15 serving as a basis for mounting of the adjustable blade 1 is formed. These reference planes 15 are a portion fixed by caulking or the like to the blade adjusting mechanism 3. The reference planes 15, as shown in Fig. 1 as an example, are formed by cutting out the shaft portion 12 on its opposite sides in a manner to have a substantially constant inclination with respect to the blade portion 11.

Next, the turbine frame 2 will be described. The turbine frame 2 is constructed as a frame member for rotatably holding the plurality of adjustable blades 1. The turbine frame 2, as shown in Fig. 1 as an example, is constructed to sandwich the adjustable blades 1 by a frame segment 21 and a holding member 22 thereof. The frame segment 21 comprises a flange portion 23 for receiving the shaft portions 12 of the adjustable blades 1 and a boss portion 24 for being fitted therearound with the blade adjusting mechanism 3 described later. In such construction, the same number of receiving holes 25 as the number of the adjustable blades 1 are formed on a peripheral portion of the flange portion 23 spaced regularly.

The holding member 22 is formed to have a disk shape having an opening at the center thereof as shown in Fig. 1. In order to always rotate the blade portions 11 of the adjustable blades 1 sandwiched by the frame segment 21 and the holding member 22 smoothly, the dimension between the frame segment 21 and the holding member 22 is maintained at a substantially constant dimension (approximately the dimension of the blade width of the adjustable blade 1) and, as an example, the dimension is maintained by caulking pins 26 provided at four positions on the radially outer side of the receiving holes 25. Correspondingly, pin insertion holes 27 for receiving the respective caulking pins 26 are formed on the frame segment 21 and holding member 22.

In the illustrate embodiment, the flange portion 23 of the frame segment 21 comprises two flange parts, i.e. a flange part 23A having almost the same diameter as that of the holding member 22 and a flange part 23B having a somewhat larger diameter than that of the holding member 22. These flange parts are formed of a single member. However, in the case where it is too complicated to make the flange parts 23A and 23B by processing the same member, the flange parts 23A and 23B may be constructed in such a manner that two flange parts having different diameters are formed separately and then joined to each other by caulking, brazing or the like.

Here, the wording "method of manufacturing a turbine frame" recited in the title of the present invention substantially refers to the method of manufacturing the frame segment 21. The frame segment 21 uses, as a starting material, a blank which is blanked or punched out from a heat-resistant metal material of a substantially constant thickness so as to integrally include the flange portion 23 and the boss portion 24. The frame segment 21 is obtained as a finished product by subjecting the blank to suitable processing. It is to be noted that a blank that will serve as a staring form for the segment is referred to as a shaped material W (the blank in processing prior to completion is also referred to as the shaped material W).

Next, the blade adjusting mechanism 3 will be described. The blade adjusting mechanism 3 is provided on the outer periphery of the boss portion 24 of the turbine frame 2 to rotate the adjustable blades 1 so as to control the flow rate of the exhaust gas. The blade adjusting mechanism 3, as shown in Fig. 1 as an example, comprises a rotating member 31 for substantially causing the rotation of the adjustable blades 1 in the assembly and transmitting members 32 for transmitting the rotation to the adjustable blades 1. As shown in Fig. 1, the rotating member 31 is formed to have an approximate disk shape having an opening at the center thereof and provided on a peripheral portion thereof with the same number of transmitting members 32 as that of the adjustable blades 1 spaced at regular intervals. The transmitting member 32 comprises a driving element 32A rotatably mounted on the rotating member 31 and a driven element 32B fitted fixedly on the reference planes 15 of the adjustable blade 1. In the state where the driving element 32A and the driven element 32B are connected to each other, the rotation is transmitted. More specifically, the driving element 32A having the shape of a rectangular piece is pivotally mounted to the rotating member 31, and the driven element 32B which is formed to be substantially U-shaped to receive the driving element 32A is fixed on the reference planes 15 at the distal end of the adjustable blade 1. The rotating member 31 is attached to the boss portion 24 such that the driving elements 32A having a rectangular piece shape are fitted into the respective U-shaped driven elements 32B, to thereby engage the driving elements 32A and the driven elements 32B with each other.

In the initial state where the plurality of adjustable blades 1 are attached, in order to align them on the circumference, it is necessary that each of the adjustable blades 1 and a respective one of the driven elements 32 B are attached to form a predetermined angle. In the illustrated embodiment, the reference planes 15 of the adjustable blade 1 mainly perform such an alignment function. Furthermore, in the case where the rotating member 31 is simply fitted into the boss portion 24, it is feared that the engagement of the transmitting member 32 is released when the rotating member 31 slightly moves away from the turbine frame 2. Therefore, in order to prevent this, a ring 33 or the like is provided on the side opposite to the turbine frame 2 such that the rotating member 31 is interposed between the ring 33 and the turbine frame 2, to thereby urge the rotating member 31 toward the turbine frame 2.

By such a structure, when the engine is running at low rotational speeds, the rotating member 31 of the blade adjusting mechanism 3 is rotated as necessary, and the rotation is transmitted to the shaft portions 12 through the transmitting members 32, so that the adjustable blades 1 are rotated as shown in Fig. 1 so as to suitably throttle the exhaust gas G, with the result that the flow rate of the exhaust gas is regulated.

The exhaust gas guide assembly A using the turbine frame 2 manufactured according to the present invention has the basic structure as described above. The method of manufacturing the turbine frame will be described below. It is to be noted that the wording "turbine frame" herein substantially denotes the frame segment 21 as described above. To form the frame segment 21, a blank which is blanked to a substantially constant thickness (shaped material W) is used as a starting material. Appropriate processing is performed on the shaped material W, such as forming the boss portion 24 to be a projection on the shaped material and forming the receiving holes 25 and the pin insertion holes 27, to thereby obtain the frame segment 21 as a finished product. When a distinction is necessary between the flange portion 23 and the boss portion 24 in the shaped material W prior to a finished state and those in the finished state, the formers are respectively referred to as a flange forming portion 23a and a boss forming portion 24a.

### (1) Preparing Shaped Material (Blanking a Blank)

This step is intended to prepare a blank (a shaped material W) of a substantially constant thickness which is blanked or punched out so as to obtain the aimed at frame segment 21. Here, the blank having an approximately circular shape in plan view and a thickness of about 5 mm is blanked or punched out from a steel strip or the like. As the material for the shaped material W (blank), heat resisting rolled materials such as SUS304, SUS316, SUS310S, SUH310, SUH660, NCF800H (Incoloy 800H) and Inconel 625 are used. Incidentally, to obtain the shaped material W by casting, that is, when a heat-resistant casting is used as the material for the shaped material W, projection formation on the blank by burring or deep drawing in a later stage is extremely difficult to perform. Therefore, a blank blanked from a heat resisting rolled material is used as the shaped material W in the present invention.

It is to be noted that the blank need not always be prepared by blanking from a plate-shaped material. If a blank blanked into an appropriate shape in advance (commercially available product in particular) is applicable, bringing-in of such a blank may be regarded as the step of preparing the shaped material.

### (2) Forming Boss Portion into Projection

Following the preparation of the shaped material W, the boss forming portion 24a is formed to be projected on the shaped material W having a flat plate-like shape. Here, burring, deep drawing or the like is carried out using a press forging die. It is to be noted that, for purposes of distinction herein, the method in which a preparatory hole for burring is first formed in the shaped material W and then the boss forming portion 24a is formed to be in a projecting state is called burring while the method in which a projection of a cup shape is formed on the shaped material W without a preparatory hole being formed is called deep drawing. These methods are collectively called projection forming. Burring and deep drawing will be described below.

### (i) Burring

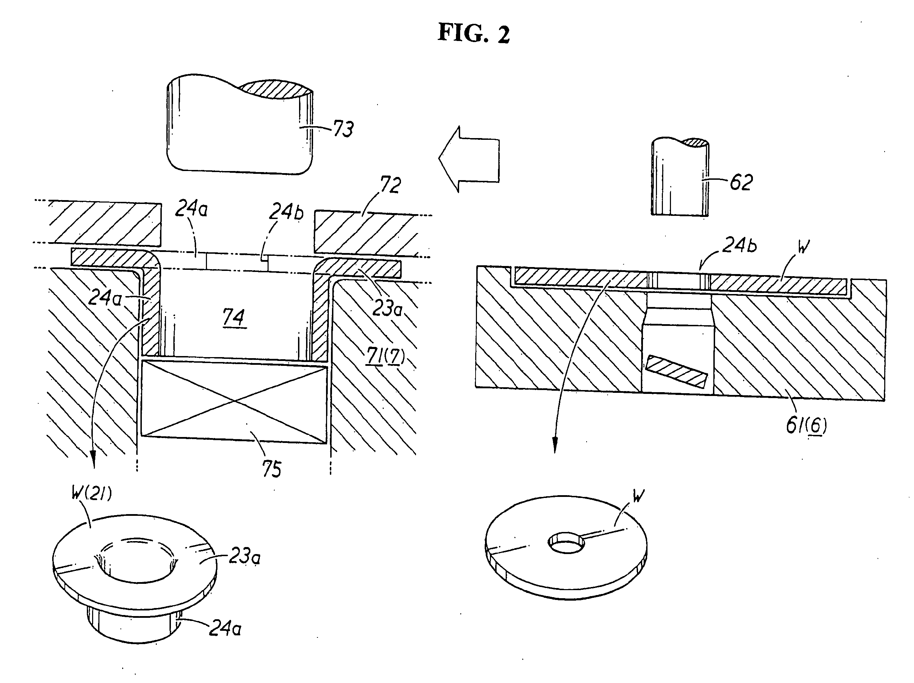

To cause the boss forming portion 24a to project by burring, a preparatory hole for burring is formed substantially at the center of the shaped material W first. This preparatory hole is noted by reference number 24b because the hole is formed to correspond to the boss forming portion 24a. A piercing device 6 having a die 61 and a punch 62 as main component members is used, for example, to form a preparatory hole 24b. Naturally, the preparatory hole 24b is formed to have a diameter smaller than an inner diameter of the boss portion 24 in a finished state. As an example, the preparatory hole 24b is formed to have a diameter approximately 70% of the boss portion 24 in the finished state. The shaped material W with the preparatory hole 24b has an approximately donut-shape in plan view as shown in Fig. 2.

Thereafter, the shaped material W is formed to have a projection substantially tubular in shape (pipe-shaped) by a burring device 7 so as to expand the preparatory hole 24b. At this time, the burring device 7 includes, as main members, a die 71, a blank holder 72 for holding the flange forming portion 23a that is a peripheral edge portion of the shaped material W such that the flange forming portion 23a is sandwiched therebetween and a punch 73 for pressing out the boss forming portion 24a. The shaped material W is pressed into a substantial forming acting portion 74 formed on the die 71 when pressed by the punch 73. The burring device 7 is provided as appropriate with an opposed punch 75 for pressing the shaped material W from the side opposite to the punch 73. The opposed punch 75 flattens a distal end of the boss forming portion 24a to be on the same plane. It is also possible to provide the opposed punch 75 with a knock-out function to eject the burred shaped material W out of the forming acting portion 74.

### (ii) Deep Drawing

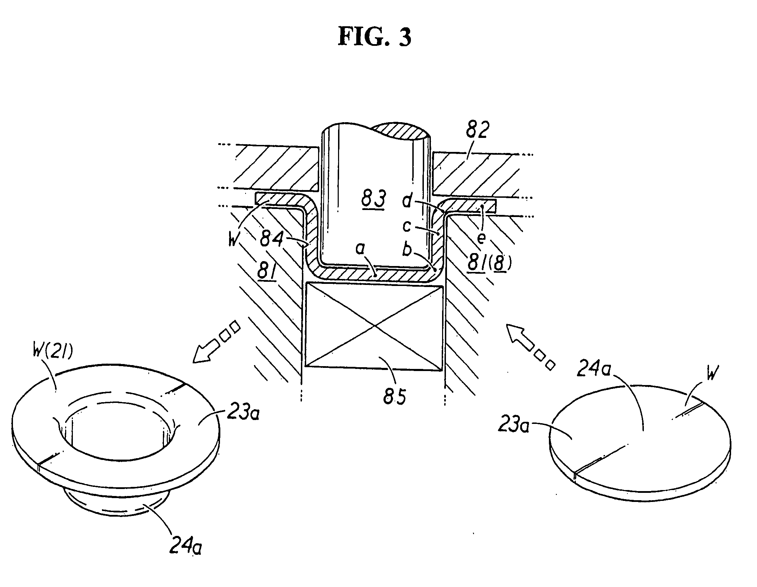

A deep drawing device 8 is used to perform deep drawing on the shaped material W having a flat plate-like shape with no preparatory hole 24b so as to form the boss forming portion 24a in a projecting state. The deep drawing device 8 will be described first. The deep drawing device 8 is configured substantially similarly to the burring device 7, for example, as shown in Fig. 3. More particularly, reference numerals 81 and 82 represent a die and a blank holder for holding the shaped material W while reference numeral 83 represents a punch for pressing out the boss forming portion 24a. Reference numeral 84 represents a substantial forming acting portion formed on the die 81 while reference numeral 85 represents an opposed punch for pressing the shaped material W from the side opposite to the punch 83. The opposed punch 85 effectively and mainly prevents the center portion of the shaped material W from excessively bending. It is also possible to provide the opposed punch 85 with a knock-out function to eject the deep-drawn shaped material W out of the forming acting portion 84. Alternatively, a so-called opposed hydraulic forming machine may be used as the deep drawing device 8.

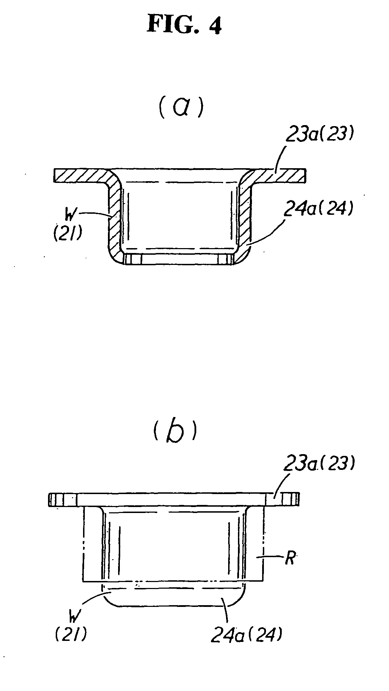

The shaped material W removed from the deep drawing device 8 is formed to have a so-called bottomed cylinder shape as shown concurrently in Fig. 3. Then, a hole is formed in the boss forming portion 24a substantially at the center thereof. The hole can be formed by trimming using a punch or by a cutting operation, for example, as shown in Fig. 4(a) (trimming being preferred in consideration of actual productivity). It is also possible to form the hole by fitting a ring R of a constant length onto the boss forming portion 24a and cutting off a portion thereof outside the ring R, to thereby form the boss portion 24 having a desired length.

Though the boss forming portion 24a (boss portion 24) is formed to have an appropriate length by burring and deep drawing as described above, it is also possible to form the boss portion 24 to have a desired length, for example, by a multi-stage projection forming step so to speak, that is, by performing ironing on the boss forming portion 24a that has already been formed to be in a projecting state to some extent. In this case, ironing can be conducted by a press forging device similar to the burring device 7 and the deep drawing device 8 mentioned above (illustration omitted).

As the frame segment 21 shown in Fig. 1 has the flange portion 23 constituted by two flange sections different in diameter from each other, the flange portion 23 is, as a whole, thicker than the boss portion 24. However, since a blank of a substantially constant thickness is used as the starting material or shaped material W in the present invention, it is nearly impossible to form the flange forming portion 23a to be thicker than the boss forming portion 24a. Consequently, it is possible, for example, that the flange forming portion 23a formed on the shaped material W is used as a flange portion 23A of a small diameter and a flange portion 23B of a large diameter is formed as a separate piece from the flange portion 23A, and they are joined together at the completion of projection forming. It is also naturally possible that the flange forming portion 23a formed on the shaped material W is used as the flange portion 23B of a large diameter and the flange portion 23A of a small diameter is formed as a separate piece, and they are joined together.

### (3) Forming Receiving Holes and Others

At the completion of the aforementioned projection forming, the flange forming portion 23a of the shaped material W has no receiving hole 25 or pin insertion hole 27 formed therein. Such holes are formed as appropriate by piercing or the like, and other portions are formed as necessary into desired shapes or dimensions. It is possible to finish the receiving holes 25 and the like to have a diameter with a desired accuracy by so-called swaging in which a steel ball is pressed into the holes.

When the boss forming portion 24a is formed to be a projection by deep drawing, the receiving holes 25 and the pin insertion holes 27 are concurrently formed at the time a hole is formed in the boss portion 24 in the end.

It is preferred that the receiving holes 25 and the pin insertion holes 27 be made after burring when projection forming is performed by burring. These arrangements are intended to minimize geometric distortion of the shaped material W caused by stress during forming of the preparatory hole 24b and burring (including tensile and compressive stresses caused by processing and thermal stress during heating if any). However, in a case where the receiving holes 25 and other holes are not particularly adversely affected, the receiving holes 25 and the pin insertion holes 27 may be formed concurrently with burring.

In this embodiment, the so-called rigid pressing technique is adopted in which forming is conducted with tool members such as a die and a punch for pressing out the shaped material W (boss forming portion 24a) that are formed by a metal material having an appropriate rigidity, the present invention is not limited thereto. The hydraulic pressing technique may be used in which forming is conducted by directly applying a hydraulic pressure to the shaped material W instead of using the die and the punch. When the shaped material W is formed to have a projection by the hydraulic pressing technique, it is easier to control the applied pressure, pressure application speed and the like as compared with the rigid pressing technique, to thereby prevent wrinkles and the like, resulting in the shaped material W being processed with a higher accuracy.

Thus, processing (plastic working) conducted in the present invention is substantially press forging, and cold forging to which the shaped material W is subjected at room temperature or at a temperature close thereto is preferred among press forging techniques from the viewpoints of cost reduction, simplification of step control and the like. However, for the purpose of providing improved formability or improved degree of freedom for deforming the shaped material W, the shaped material W and the processing devices (hole forming, burring and deep drawing devices 6, 7 and 8) are heated as appropriate in some or all of the processing steps described above. Such embodiments will be described below.

### (1) Heating or the like Depending on High-Temperature Strength of Shaped Material

This technique determines the heating temperature and processing speed in accordance with a high-temperature deformation resistance or high-temperature strength of the shaped material W. For example, projection forming on the shaped material W is carried out by press forging in a warm condition where the shaped material W is heated to about 300°C. More specifically, for example, in the case where the high-temperature strength of the shaped material W is 500 MPa or more, the shaped material W is heated to approximately 300 to 350°C and processed at the speed of 1000 mm/s or more. This reduces force required for press forging and provides improved formability to the shaped material W, to thereby allow forming to an extent extremely close to the desired shape and dimensions.

In the case where ironing is, for example, conducted following projection forming by press forging, the ironing is performed in a cold condition in a room temperature atmosphere. This minimizes defects such as expansion, contraction, spring-back, excess metal, shrinkage and the like.

### (2) Warm Forming in Consideration of Md₃₀ of Material

In this technique, either one or both of the raw material (shaped material W) and the processing device is heated to 50 to 200°C in accordance with an Md₃₀ value which is a strain induced martensitic transformation index of the shaped material W. Herein, the term "Md₃₀", which is typical of austenitic (stainless steel) materials, denotes the temperature at which 50 vol% of an austenitic phase transforms into a ferromagnetic high-strength martensitic phase, when uniaxial tensile stress true strain is imparted to a raw austenite plate, and which indicates that the higher the value, the likelier the raw material is to change into martensite. Md₃₀ is the value predetermined by the composition and micro grain size of the heat resisting material used as the shaped material W.

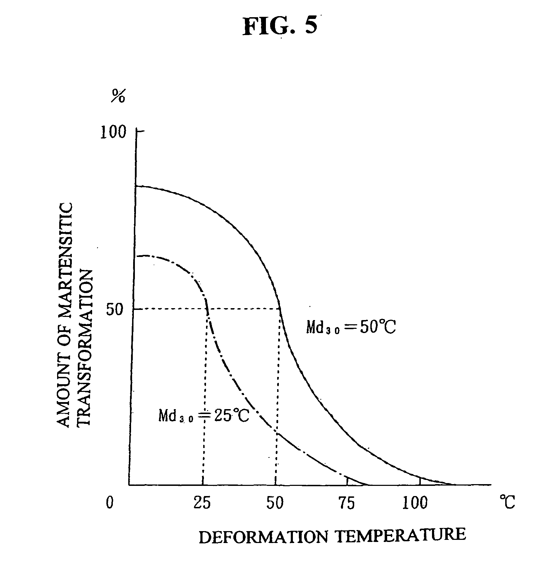

Fig. 5 shows the relationship between the deformation temperature and the amount of martensitic transformation when Md₃₀ = 25°C and Md₃₀ = 50°C. It is apparent from Fig. 5 that to obtain the same amount of martensitic transformation, the higher the Md₃₀ value, the higher the deformation temperature must be. For this reason, the higher the Md₃₀ value, the higher heating temperature is set for the shaped material W and the processing device (forging die). For instance, the heating temperature for the shaped material W and the processing device is set to be about 150°C when Md₃₀ = about 0°C, and to be about 200°C when Md₃₀ = about 20°C.

Thus, the shaped material W is processed under proper heating conditions according to the type of material used, to thereby enhance flow of the metal material of the shaped material W, facilitating not only processing in the heated condition but also processing in later stages. That is, a small amount or several vol% or less of martensite is uniformly transformation distributed while being associated with the dislocation density equivalent to that of austenite, with the result that deformation margin is enhanced during processing in the heated condition and processing in later stages. The assignee of the present invention has confirmed that when this heating technique (heating according to the Md₃₀ value) is used during burring, the bore expansion ratio improves considerably to about 1.5 as compared with about 1.2 in a conventional technique although the value may vary depending on the material used. The term "bore expansion ratio" refers to the value obtained by dividing the limit burring diameter by the diameter of the preparatory hole 24b, which indicates that the larger the value, the larger the deformation margin.

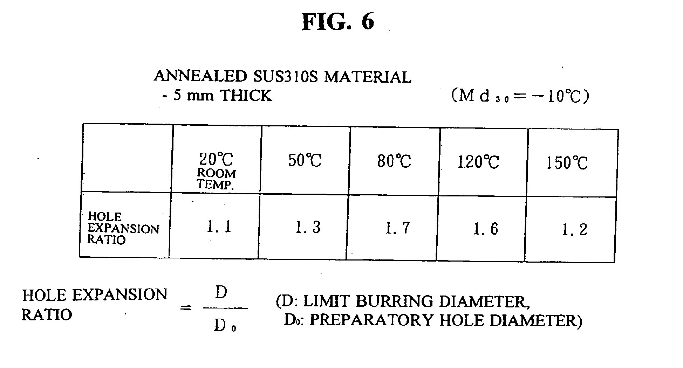

Fig. 6 shows an example of relationship between heating temperatures of the shaped material W and the bore expansion ratio. The shaped material W used here is an annealed SUS310S material which has a thickness of about 5 mm and of which Md₃₀ = -10°C. It is clear from this table that the bore expansion ratio that is 1.1 at room temperature considerably increases to about 1.7 when the heating temperature is set to be approximately 80°C. Thus, heating according to the Md₃₀ value of the material enhances the deformation margin of the shaped material W and additionally ensures a reduction in load to be applied to the die and the punch during processing, resulting in the processing operation per se being facilitated.

It is preferred that when burring is performed on contact surfaces between the device and the shaped material W during processing, or in the case where, for example, the shaped material W is burred, contact portions between the punch 73 and the inner surface of the boss forming portion 24a be subjected to the so-called bonderizing in which a water-soluble heat-resistant lubricant is interposed to reduce friction therebetween. The bonderizing is a treatment by which a heat-resistant special lubricant is applied or a coating thereof is formed, wherein the lubricant is prepared by adding wax as appropriate to trimethyl borate or phosphate or both thereof and mixing the resultant mixture into an organic solvent or water and the lubricant is applied by direct coating, a roll coater, a drip feed lubricator, pre-reaction treatment or the like. Since ordinary lubricants deteriorate in lubricity as a result of reduced viscosity due to heating, they are hardly usable in a high-temperature atmosphere. Since lubricants of high viscosity such as WS₂ and MoS₂ are poor in workability and particularly in removability, they are unfit after all. Unlike such lubricants, the aforementioned water-soluble heat-resistant lubricant ensures smooth and reliable projection forming such as burring and provides improved properties associated with use of the lubricant such as coatability, dryability, high-temperature lubricity and removability, whereby the turbine frame 2 can be manufactured more efficiently.

### (3) Imparting Temperature Gradient

This technique imparts an appropriate temperature gradient to the shaped material W to be processed and will be described here by taking as an example the shaped material W that undergoes deep drawing as shown in Fig. 3. In Fig. 3, a point a is located substantially at the center portion (boss forming portion 24a) of the shaped material W. Reference characters b, c, d and e are assigned in sequence to points between the point a and a peripheral edge portion (flange forming portion 23a) of the shaped material W. That is, the point a represents substantially the center of the punch 83 on the shaped material W, the point b the shoulder portion of the punch 83 thereon, the point d the shoulder portion of the die 81 thereon and the point e the circumferential edge portion held between the die 81 and the blank holder 82. The point c represents substantially the midpoint of the wall portion (near the center between the points b and d) formed by deep drawing.

Here, a temperature gradient is imparted to the shaped material W under deep drawing in such a manner that the boss forming portion 24a (center portion) is the low-temperature side and the flange forming portion 23a (peripheral edge portion) is the high-temperature side. For this purpose, the punch 83 comprises appropriate cooling means such as cooling water circulation and is configured so as to bring the bottom portion thereof for pressing the shaped material W into a low-temperature state. The die 81 and the blank holder 82 comprise appropriate heating means such as electric heater and are configured so as to heat the peripheral edge portion of the shaped material W (held portion). In the embodiment shown in Fig. 3, the portion of the shaped material W to which the temperature gradient is imparted is the wall portion formed by deep drawing, that is, the temperature gradient is imparted to the portion between the points b to d (the point a as the low-temperature side and the point e as the high-temperature side), and the magnitude of the temperature gradient is, for example, about 0.5 to 3°C/mm.

Further, this embodiment is so configured that the point a of the shaped material W is kept substantially at a constant low temperature and the point e of the shaped material W is heated to an appropriate temperature by controlling the current flowing through the heater or the like. The reason for this is that it is often necessary to heat the point e side of the shaped material W as deep drawing progresses in order to maintain the temperature gradient in the range of about 0.5 to 3°C/mm, due to elongation of the points b to d of the shaped material W during deep drawing. However, in the case where the temperature gradient does not depart from the range of approximately 0.5 to 3°C/mm even when the point e of the shaped material W is maintained constant in a heated condition, it is possible to maintain the current flows through the heater constant during processing.

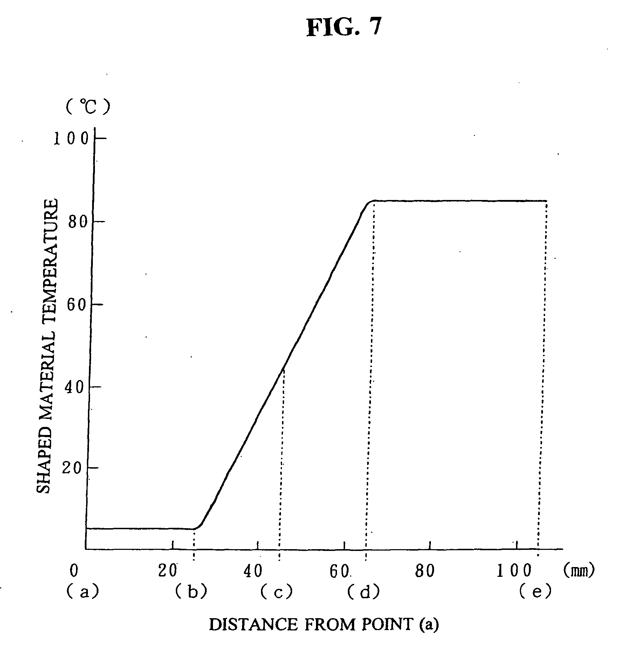

Fig. 7 illustrates an example of temperatures at the respective points of the shaped material W during deep drawing. Here, the points a and b are maintained constant at approximately 5°C while the points d to e are kept at about 85°C. The temperature gradient in the wall portion is calculated to be about 2°C/mm from (85 - 5)/40 since the distance between the points b to d is about 40 mm.

Though, in this embodiment, the flange forming portion 23a (point e) of the shaped material W is heated and the boss forming portion 24a (point a) is cooled, it is sufficient to only heat the point e in the case where it is possible to obtain the desired temperature gradient which allows the point e to be the high-temperature side without actively cooling the punch 83 so as to provide sufficiently improved formability (deep-drawability). The case in which the punch 83 does not require active cooling is, for example, when the Md₃₀ value which is the strain induced martensitic transformation index of the material is as high as about 20°C or more.

Here, the following briefly describes the reason why the boss forming portion 24a of the shaped material W is set at a low temperature and the details as to how the assignee acquired the knowledge that a temperature gradient of approximately 0.5 to 3°C/mm would be favorable. In deep drawing, for example, formation of the wall portion (points b to d in Fig. 2) of the shaped material W consists of deformation modes, i.e. bending, unbending and stretching, from the die 81 side. To enhance deep-drawability, it is essential to prevent rupture by the shoulder portion of the punch 83 to the utmost. For this purpose, it is necessary to ensure uniform progression of material deformation by the three deformation modes and increase the rupture resistance for an enhanced strength as the distance to the shoulder portion of the punch 83 decreases. This is the reason why the boss forming portion 24a is cooled.

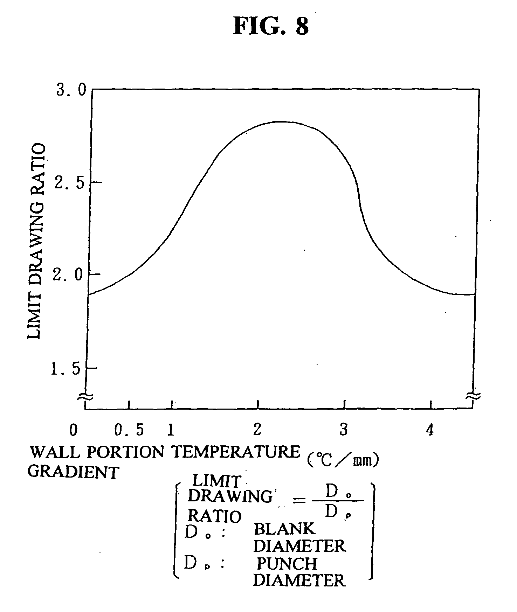

In addition, to satisfy ease of deformation in each of the modes, uniformity therein, enhanced rupture resistance and the like, imparting of a temperature gradient to the wall portion is effective. From various tests conducted in relation to imparting a temperature gradient, the assignee has attained the knowledge that the proper range thereof is approximately 0.5 to 3°C/mm. The limit drawing ratio data shown in Fig. 8 represents an example thereof. The term "limit drawing ratio" here refers to the value obtained by dividing a blank diameter Do by a punch diameter Dₚ and shows that the larger the value, the better the deep-drawability. It is apparent from the graph that the limit drawing ratio is favorable when the temperature gradient is substantially in the range of 0.5 to 3°C/mm (the limit drawing ratio is highest in the graph at the temperature gradient of approximately 2.5°C/mm).

Further, during deep drawing of the shaped material W, it is possible, for example, to control the stroke speed of the punch 83 to be 1 cm/s or less immediately before the punch reaches the bottom dead point or perform, or in addition to the low-speed control, to perform inching control in which the punch 83 is stopped once when the punch 83 reaches the bottom dead point, resulting in the deep-drawability being further improved.

Though burring and deep drawing a metal plate material and performing such processing in a warm condition have been proposed, these techniques are exclusively used for processing thin stainless steel plates and the like, whereas the techniques have still remained unapplicable to difficult-to-machine heat resisting metal materials, and more particularly to plates of such materials having a relatively large thickness of about 5 mm. However, in this embodiment, it is possible to carry out burring and deep drawing on relatively thick heat-resistant metal materials by various engineering improvements applied thereto including warm processing according to Md₃₀ of the material, bonderizing (coating with a special lubricant), imparting an appropriate temperature gradient to the shaped material W and processing speed control (low speed/inching control of stroke near the bottom dead point of the punch).

Where there is a concern over deterioration in high-temperature wear resistance as a result of use of a heat-resistant rolled material as the shaped material W, it is possible to perform a surface modification by applying a coating such as Cr-C coating (chrome carbide coating) to the surface of the turbine frame 21 (shaped material W) so as to improve high-temperature wear resistance. While Cr-N coating (chrome nitride coating) is also applicable as the surface modification in addition to Cr-C coating, Cr-C coating is preferred in consideration of the working temperature of the turbine frame 21 ranging from about 800 to about 1000°C because Cr-N coating may decompose or degrade during use.

As for the effects of the present invention, it is possible according to the invention as recited in claim 1 to carry out all of the processing steps of the frame segment 21 by pressing (forging) including the steps of blanking the blank (shaped material W), forming the boss forming portion 24a into a projection and forming the receiving holes 25, whereby the cutting operations can be eliminated to the utmost from the manufacturing processes, resulting in mass production of the frame segment 21 being actually achieved.

Carrying out some or all of the manufacturing processes of the turbine frame 2 in a warm condition reduces the force required for processing, to thereby ensure a reduced load imposed on the punch and the die. Processing in a warm condition provides improved formability to the shaped material W, whereby the product (turbine frame 2) extremely close to the desired shape and dimensions can be obtained.

The shaped material W is subjected to projection forming and the like under appropriate temperature conditions in accordance with the amount of strain induced martensitic transformation of the heat-resistant material used, to thereby manufacture the turbine frame 2 with a higher accuracy.

A temperature gradient is imparted to the shaped material in such a manner that the peripheral edge portion (flange forming portion 23a) thereof is the high-temperature side and the center portion (boss forming portion 24a) thereof is the low-temperature side, so that the deformation resistance of the peripheral edge portion (flange forming portion 23a) decreases through heating and the rupture resistance of the center portion (boss forming portion 24a) through cooling increases, to thereby allow processing under a favorable deep-drawability condition in a case of deep drawing of the shaped material W, for example.

According to a preferred embodiment, a water-soluble heat-resistant lubricant is disposed between the shaped material W and the processing device, for example, during burring of the shaped material W, to thereby effectively reduce frictional resistance between the burring device 7 and the shaped material W and provide improved coatability, removability and the like.

According to preferred embodiments, low-speed or inching control of the punch 63 is performed near the bottom dead point, for example, during deep drawing of the shaped material W, to thereby obtain the turbine frame 2 with a much higher accuracy.

Mass production of the exhaust gas guide assembly A and the VGS turbocharger with an excellent heat resistance and a high accuracy can be realized. It is also possible to ensure accurate and reliable adjustment of the flow rate of the exhaust gas G in a high-temperature exhaust gas atmosphere.

### INDUSTRIAL APPLICABILITY

As set forth hereinabove, the present invention is suitable to manufacture a turbine frame for rotatably holding adjustable blades in a VGS turbocharger with minimal time-consuming cutting operations, whereby mass production of the turbine frame and, by extension, the VGS turbocharger can be realized.

## Claims

1. A method of manufacturing a turbine frame for a VGS turbocharger, the turbine frame (2) rotatably holding a plurality of adjustable blades (1) at the outside of an outer periphery of an exhaust turbine wheel (T), the turbine frame (2) being incorporated in the VGS turbocharger,
wherein exhaust gas (G) discharged from an engine at a relatively low flow rate is suitably throttled by the adjustable blades (1) to increase the velocity of the exhaust gas (G) so that the exhaust turbine wheel (T) is rotated by energy of the exhaust gas (G) and a compressor directly coupled to the exhaust turbine wheel (T) feeds more air into the engine than is fed into it by natural suction, whereby a high output power of the engine is obtained at low rotational speeds, **characterized in that**:
a blank which is punched out from a metal material having a substantially constant thickness in such a manner as to integrally include a boss forming portion (24a) and a flange forming portion (23a) is used as a shaped material (W) serving as an original member for the turbine frame (2);
the shaped material (W) is formed of an austenitic heat resisting material;
when the shaped material (W) is processed, the boss forming portion (24a) is formed into a projecting state by a press forging tool;
when the shaped material (W) is processed, either one or both of the shaped material (W) and a processing device are heated depending on an Md₃₀ value which is a strain induced martensitic transformation index of the shaped material (W);
when the shaped material (W) is processed, a temperature gradient is imparted to the shaped material (W) to be processed in such a manner that the boss forming portion (24a) is the low-temperature side and the flange forming portion (23a) is the high-temperature side and the magnitude of the temperature gradient is maintained in the range of 0.5 to 3ºC/mm; and
receiving holes (25) for rotatably holding the respective adjustable blades (1) are formed in the flange forming portion (23a) by punching.

2. A method of manufacturing a turbine frame for a VGS turbocharger as defined in claim 1, wherein when the shaped material (W) is processed, a water-soluble heat-resistant lubricant is interposedly disposed at a contact portion between the shaped material (W) and the processing device.

3. A method of manufacturing a turbine frame for a VGS turbocharger as defined in claim 1 or 2, wherein the press forging tool includes as its main members a die, a punch and a blank holder; and
the punch is subjected to either one or both of low-speed control and inching control in the vicinity of a bottom dead point.

4. A method of manufacturing a turbine frame for a VGS turbocharger as defined in claim 1, 2 or 3, wherein the thickness of the metal material for the shaped material (W) is 5 mm.

## Patentansprüche

1. Verfahren zur Herstellung eines Turbinenrahmens für einen VGS-Turbolader, wobei der Turbinenrahmen (2) mehrere einstellbare Schaufeln (1) drehbar an der Außenseite eines äußeren Umfangs eines Abgasturbinenrads (T) hält, und der Turbinenrahmen (2) in den VGS-Turbolader integriert ist,
wobei Abgas (G), das aus einem Motor bei einer verhältnismäßig niedrigen Durchflussrate entladen wird, durch die einstellbaren Schaufeln (1) in geeigneter Weise gedrosselt wird, um die Geschwindigkeit des Abgases (G) so zu erhöhen, dass das Abgasturbinenrad (T) durch die Energie des Abgases (G) gedreht wird und ein Kompressor, der direkt mit dem Abgasturbinenrad (T) verbunden ist, dem Motor mehr Luft zuführt, als ihm durch natürliche Ansaugung zugeführt wird, wodurch eine hohe Ausgangsleistung des Motors bei niedrigen Drehzahlen erreicht wird, **dadurch gekennzeichnet, dass**:
ein Rohling, welcher derart aus einem Metallmaterial mit einer im Wesentlichen gleichmäßigen Dicke ausgestanzt wird, dass er einstückig einen Nabenbildungsabschnitt (24a) und einen Flanschbildungsabschnitt (23a) aufweist, als ein Formmaterial (W) verwendet wird, das als ein Originalelement für den Turbinenrahmen (2) dient;
das Formmaterial (W) aus einem austenitischen, hitzebeständigen Material gebildet wird;
wenn das Formmaterial (W) verarbeitet wird, der Nabenbildungsabschnitt (24a) durch ein Schmiedepresswerkzeug in einen vorspringenden Zustand umgeformt wird;
wenn das Formmaterial (W) verarbeitet wird, eines oder beide von dem Formmaterial (W) und einer Verarbeitungsvorrichtung in Abhängigkeit von einem Md₃₀-Wert erwärmt werden, der ein dehnungsinduzierter martensitischer Umwandlungsindex des Formmaterials (W) ist;
wenn das Formmaterial (W) verarbeitet wird, dem zu verarbeitenden Formmaterial (W) ein Temperaturgradient verliehen wird, derart, dass der Nabenbildungsabschnitt (24a) die Niedertemperaturseite und der Flanschbildungsabschnitt (23a) die Hochtemperaturseite ist und die Größe des Temperaturgradienten im Bereich von 0,5 bis 3 °C/mm gehalten wird; und
Aufnahmelöcher (25) zum drehbaren Halten der jeweiligen einstellbaren Schaufeln (1) durch Stanzen im Flanschbildungsabschnitt (23a) ausgebildet werden.

2. Verfahren zur Herstellung eines Turbinenrahmens für einen VGS-Turbolader nach Anspruch 1, wobei, wenn das Formmaterial (W) verarbeitet wird, wasserlösliches, hitzebeständiges Schmiermittel an einem Kontaktabschnitt zwischen dem Formmaterial (W) und der Verarbeitungsvorrichtung eingefügt angeordnet wird.

3. Verfahren zur Herstellung eines Turbinenrahmens für einen VGS-Turbolader nach Anspruch 1 oder 2, wobei das Schmiedepresswerkzeug als seine Hauptelemente eine Pressform, eine Stanze und einen Rohlinghalter aufweist; und
die Stanze einem oder beiden von einer Langsamlaufsteuerung und einer Schrittsteuerung in der Nähe eines unteren Totpunkts unterzogen wird.

4. Verfahren zur Herstellung eines Turbinenrahmens für einen VGS-Turbolader nach Anspruch 1, 2 oder 3, wobei die Dicke des Metallmaterials für das Formmaterial (W) 5 mm beträgt.

## Revendications

1. Procédé de fabrication d'un cadre de turbine pour un turbocompresseur VGS, le cadre de turbine (2) supportant de façon rotative une pluralité d'aubes réglables (1) sur le côté extérieur d'une périphérie extérieure d'une roue de turbine d'échappement (T), le cadre de turbine (2) étant incorporé dans le turbocompresseur VGS,
dans lequel un gaz d'échappement (G) déchargé à partir d'un moteur à un débit relativement faible est étranglé de façon appropriée par les aubes réglables (1) afin d'augmenter la vitesse du gaz d'échappement (G) de telle sorte que la roue de turbine d'échappement (T) soit mise en rotation par l'énergie du gaz d'échappement (G) et qu'un compresseur qui est directement couplé à la roue de turbine d'échappement (T) introduise une plus grande quantité d'air dans le moteur que la quantité qui y est introduite par l'aspiration naturelle, dans lequel une puissance à haut rendement du moteur est obtenue à des vitesses de rotation basses, **caractérisé en ce que**:
un flan qui est poinçonné à partir d'un matériau métallique qui présente une épaisseur sensiblement constante de manière à incorporer intégralement une partie de formation de bosse (24a) et une partie de formation de bride (23a) est utilisé comme matériau profilé (W) qui sert d'élément original pour le cadre de turbine (2);
le matériau profilé (W) est constitué d'un matériau austénitique résistant à la chaleur;
lorsque le matériau profilé (W) est traité, la partie de formation de bosse (24a) est formée dans un état saillant par un outil de forgeage à la presse;
lorsque le matériau profilé (W) est traité, soit un soit chacun du matériau profilé (W) et d'un dispositif de traitement est chauffé en fonction d'une valeur Md₃₀ qui est un indice de la transformation martensitique induite par une déformation du matériau profilé (W);
lorsque le matériau profilé (W) est traité, un gradient de température est imprimé au matériau profilé (W) à traiter de telle sorte que la partie de formation de bosse (24a) soit le côté à basse température, et que la partie de formation de bride (23a) soit le côté à haute température, et la grandeur du gradient de température est maintenue dans la gamme de 0,5°C/mm à 3°C/mm; et
des trous de réception (25) pour maintenir de façon rotative les aubes réglables respectives (1) sont formés par poinçonnage dans la partie de formation de bride (23a).

2. Procédé de fabrication d'un cadre de turbine pour un turbocompresseur VGS selon la revendication 1, dans lequel, lorsque le matériau profilé (W) est traité, un lubrifiant résistant à la chaleur soluble dans l'eau est interposé à une partie de contact entre le matériau profilé (W) et le dispositif de traitement.

3. Procédé de fabrication d'un cadre de turbine pour un turbocompresseur VGS selon la revendication 1 ou 2, dans lequel l'outil de forgeage à la presse comprend comme éléments principaux une matrice, un poinçon et un serre-flan; et
le poinçon est soumis à une et/ou l'autre d'une commande à basse vitesse et d'une commande par à-coups dans le voisinage d'un point mort inférieur.

4. Procédé de fabrication d'un cadre de turbine pour un turbocompresseur VGS selon la revendication 1, 2 ou 3, dans lequel l'épaisseur du matériau métallique pour le matériau profilé (W) est de 5 mm.
